# FASCICULE DE BREVET EUROPEEN

(11) **EP 2 860 109 B1**
(45) Date de publication et mention de la délivrance du brevet: **13.04.2016**
(21) Numéro de dépôt: 14003314.3
(22) Date de dépôt: 25.09.2014
(51) Int. Cl.: B64C 27/72

(54) **Pale de rotor à vrillage adaptatif, et aéronef muni d'une telle pale**
Rotorblattverdrehmechanismus und Luftfahrzeug mit einem solchen Rotorblatt
Rotor blade twist mechanism and aircraft comprising such a blade

(30) Priorité: 11.10.2013 FR 1302363
(43) Date de publication de la demande: 15.04.2015
(73) Titulaire: Airbus Helicopters, 13725 Marignane Cedex (FR)
(72) Inventeur: Zamponi, Laurent, F-13127 Vitrolles (FR); Fontaine, Nicolas, 13090 Aix en Provence (FR); Durand, Valérian, F-93700 Drancy (FR); Hirsch, Jean-François, F-13090 AIX EN Provence (FR); Grohmann, Boris, D-81247 München (DE)
(74) Mandataire: GPI & Associés

(56) Documents cités:
- DE-C1- 19 528 155
- US-A1- 2013 062 456

## Description

La présente invention concerne une pale à vrillage adaptatif ainsi qu'un aéronef muni d'une telle pale, et plus particulièrement mais non exclusivement une pale d'un rotor de sustentation de giravion.

Classiquement, une pale s'étend longitudinalement d'une première extrémité destinée à être fixée à un moyeu tournant d'un rotor vers une deuxième extrémité dite extrémité libre.

De plus, cette pale s'étend transversalement d'un bord d'attaque vers un bord de fuite. La pale comprend notamment un revêtement extérieur muni d'une première peau au niveau de son extrados dénommée par commodité « peau d'extrados », et d'une deuxième peau au niveau de son intrados dénommée par commodité « peau d'intrados ».

Une pale d'un rotor principal de sustentation d'un giravion exerce une portance durant le mouvement rotatif dudit rotor principal permettant de sustenter le giravion voire de le propulser. En fonction de l'angle de pas de la pale commandé par un pilote ou système de pilotage automatique, la portance développée par la pale est plus ou moins importante. L'angle d'incidence aérodynamique de chaque profil aérodynamique de la pale dépend de l'angle de pas de la pale. Un profil aérodynamique est dénommé « profil » par commodité.

Par contre, on observe à partir d'un angle d'incidence seuil d'un profil donné, donc d'une section de la pale, un décollement des filets d'air. Ce décollement peut par exemple se présenter au niveau du bord d'attaque ou du bord de fuite de ce profil, ou encore sur l'extrados de la pale à une distance comprise entre 50 % et 60 % de la corde de ce profil à partir du bord d'attaque. Ce décollement provoque un décrochage de la pale, soit une chute brutale de sa portance si ce phénomène se propage et demeure sur une zone comprise entre deux profils délimitant une surface critique selon l'envergure de la pale. De plus, le décollement des filets d'air génère des tourbillons qui sont à l'origine de vibrations et d'une augmentation du coefficient de traînée de la pale.

De même, du fait de la différence des vitesses locales selon l'envergure de la pale, la valeur des forces élémentaires de portance et de traînée augmente de l'emplanture vers l'extrémité dans le cas d'une pale droite. Il en résulte une répartition non homogène de la portance et de la traînée, ainsi que des moments importants au niveau de l'emplanture. Ces effets nuisent à la tenue mécanique de la pale et aux qualités de vol de la voilure tournante.

Pour limiter ces effets, une solution consiste à vriller géométriquement la pale. Le vrillage a pour effet de limiter le décollement de la couche limite sur toute l'envergure de la pale ainsi de déplacer la résultante des forces de portance et de traînée vers l'emplanture de la pale afin de réduire les moments résultants au niveau de l'emplanture. Il est à noter que le vrillage géométrique d'une pale peut se définir par l'angle formé entre la corde de chaque profil d'une section de la pale avec un plan de référence de cette pale. Parfois, on vrille chaque profil de la pale par rapport à l'axe de variation de pas de cette pale d'un angle repéré par rapport à un tel plan de référence.

Pour une trajectoire de pale donnée, on comprend que le vrillage influe directement sur l'incidence aérodynamique de chaque profil. Dans ces conditions, on appelle « loi de vrillage » l'évolution selon l'envergure de la pale desdits angles de vrillage.

La loi de vrillage d'une pale est immuable pour une pale donnée. Cette loi de vrillage résulte d'un compromis admis pour satisfaire le fonctionnement optimal du rotor sur l'ensemble du domaine de vol de l'aéronef.

En effet, on constate par exemple qu'une amplitude de vrillage faible sur l'ensemble de l'envergure de la pale permet de minimiser la puissance consommée par le rotor de sustentation d'un giravion en vol d'avancement. A l'inverse, une amplitude de vrillage importante sur l'ensemble de l'envergure de la pale permet de minimiser la puissance consommée par le rotor de sustentation d'un giravion en vol stationnaire mais est pénalisante dans le cas d'un vol d'avancement. On note que l'on entend par « amplitude faible » une amplitude de variation du vrillage comprise entre 4 et 8 degrés par exemple, alors que l'on entend par « amplitude importante » une amplitude comprise entre 16 et 20 degrés par exemple.

Ainsi, une amplitude de vrillage comprise entre ces amplitudes faible et importante représente un compromis entre une phase de vol d'avancement et une phase de vol stationnaire en termes de puissance consommée.

Pour éviter un tel compromis, il est envisagé de modifier de manière active le vrillage d'une pale, au moins localement. Ainsi, en adaptant le vrillage de la pale à des configurations de vol précises, les performances d'un giravion peuvent être notablement améliorées vis-à-vis de la charge utile transportable et/ou de sa vitesse de croisière. L'impact environnemental peut également être réduit par une baisse de consommation de carburant, et ce pour des performances équivalentes voire meilleures par rapport à un giravion muni de pales à angle de vrillage non adaptable.

Pour vriller une pale, une technique consiste à déformer en torsion une structure de la pale. Une telle déformation peut être entreprise à l'aide d'un actionneur fournissant une force motrice pour vriller la pale. Les actionneurs peuvent être couplés avec la mise en place d'une structure de pale en matériaux composites réalisée avec un drapage spécifique de fibres.

Selon une réalisation, une masse est déplacée en corde à l'extrémité libre d'une pale pour déplacer le centre de gravité de la pale. Ce décalage engendre un moment de torsion sur la pale autour de l'axe de pas de la pale par exemple, dû à la combinaison conicité/force centrifuge. La masse peut être déplacée à l'aide d'un actionneur. En outre, le moment de torsion exercé sur une section de pale peut être transmis à une autre section de pale via une barre de torsion.

Les documents US2013/0062456, US2012/0153073, US5505589 explicitent des solutions de ce type.

L'utilisation d'un actionneur est intéressante. Cependant, l'implantation d'un actionneur au sein d'une pale et notamment une pale de giravion peut être délicate.

En effet, l'espace d'implantation est de fait réduit ce qui limite les dimensions de l'actionneur à agencer.

De plus, l'actionneur est soumis à des sollicitations mécaniques élevées (force centrifuge, vibrations).

Si un actionneur électrique est implanté, cet actionneur électrique doit en outre être alimenté électriquement ce qui peut poser des difficultés d'agencement dans un repère tournant. Le transfert d'une puissance électrique d'un repère fixe correspondant à la cellule du giravion vers un repère tournant correspondant au rotor peut être contraignant. Le niveau de difficulté rencontré dépend de la tension ou de l'intensité du courant électrique à transférer.

Pour alimenter un actionneur de type électromécanique de quelques kilowatts, un collecteur tournant peut être utilisé pour transférer le courant électrique d'un générateur situé dans le giravion vers un actionneur situé dans une pale. Les exigences de performances et de fiabilité rendent ce collecteur tournant onéreux.

Un actionneur de type piézoélectrique nécessite une intensité restreinte par rapport à un actionneur électromécanique, mais par contre un courant électrique présentant une tension plus élevée. Cette contrainte complique le collecteur tournant et augmente significativement son coût.

L'utilisation d'actionneurs nécessitant une puissance électrique élevée peut donc induire des problèmes d'encombrement et des coûts d'installation élevés.

Or, la structure d'une pale peut avoir une rigidité en torsion relativement élevée pour satisfaire un comportement dynamique sain. La modification du vrillage d'une telle structure tend à exiger la mise en place d'actionneurs puissants.

L'usage de tels actionneurs pour des puissances élevées met donc en oeuvre des solutions techniques complexes et coûteuses pour assurer le bon fonctionnement de tels systèmes avec un niveau de fiabilité élevé.

Selon une autre réalisation, la structure d'une pale en matériaux composites comporte des fibres présentant une orientation particulière pour générer une torsion de la pale sous l'effet de la force centrifuge. Une traction exercée sur ces fibres par la force centrifuge génère une torsion de la pale. Ces fibres peuvent être agencées sur les peaux d'extrados et d'intrados de la pale, ou sur une lame présente dans cette pale par exemple.

Les documents US2012/0153073, FR2737465, qui est considéré l'état de la technique plus proche, FR2956856 décrivent des systèmes exploitant ce principe.

Le document US 7037076 suggère l'utilisation d'un alliage à mémoire de forme pour générer une rotation d'une extrémité d'une pale.

Le document FR 2374212 divulgue une pale munie de deux longerons fixés à un arbre de mise en pas pour qu'une modification du pas de la pale entraîne un vrillage des longerons.

D'autres techniques sont éloignées de l'invention et visent à modifier les profils de la pale, au lieu de les déplacer.

Ainsi, les documents WO 2007/079855, WO 2004/069651, US 2006/0038058 et EP1144248 proposent de modifier le profil de sections d'une pale à l'aide d'actionneurs piézoélectriques. Une telle déformation est dénommée parfois « morphing » en langue anglaise.

Les documents FR2924681, US5004189, US2008/0145220, US7677868 exploitent des actionneurs électromécaniques.

Le document US7837144 prévoit un actionneur pneumatique.

Les documents WO2010/043645, WO2010/023286, WO2010/023278 WO2009/056136 sont relatifs au domaine éloigné des pales d'éoliennes.

La présente invention a alors pour objet de proposer une pale à vrillage adaptatif.

Selon l'invention, une pale de rotor à vrillage adaptatif est munie d'un élément sustentateur qui comprend un revêtement extérieur s'étendant selon une direction longitudinale en envergure d'une première zone extrémale à une deuxième zone extrémale et transversalement d'un bord d'attaque vers un bord de fuite, ce revêtement extérieur délimitant une cavité interne.

Cette pale comporte au moins un système de vrillage adaptatif muni :
- d'un chariot disposé dans la cavité, le chariot étant muni d'une barre de torsion s'étendant le long de ladite direction longitudinale et d'au moins deux bras qui sont solidaires de la barre de torsion et qui s'étendent transversalement de part et d'autre de la barre de torsion, le chariot étant mobile en translation dans la cavité selon ladite direction longitudinale,
- d'une liaison à chaque bras pour relier ledit chariot au revêtement extérieur, chaque liaison incluant un tronçon de la pale comprenant une galerie de cheminement amont agencée dans la cavité entre le bord d'attaque de la pale et la barre de torsion et une galerie de cheminement aval agencée dans la cavité entre le bord de fuite de la pale et la barre de torsion, chaque bras s'étendant transversalement d'une extrémité amont coulissant dans une galerie de cheminement amont vers une extrémité aval coulissant dans une galerie de cheminement aval,
- au moins une desdites liaisons étant une liaison hélicoïdale incluant une galerie de cheminement amont et une galerie de cheminement aval d'un tronçon dit « tronçon de vrillage » présentant des orientations distinctes générant une rotation de ce « tronçon de vrillage » sous l'effet d'une translation du chariot.

Chaque liaison comprend donc deux galeries de cheminement amont et aval disposées dans un même tronçon de la pale.

Une liaison hélicoïdale comprend ainsi une galerie de cheminement amont et une galerie de cheminement aval qui ne sont pas parallèles entre elles. A l'inverse, une liaison présentant une galerie de cheminement amont parallèle à une galerie de cheminement aval permet l'obtention d'une liaison glissière.

Les termes « amont » et « aval » font références au sens de circulation de l'air autour de la pale, cet air s'écoulant du bord d'attaque vers le bord de fuite de la pale.

L'invention propose donc un système de vrillage muni d'un chariot. Le chariot engendre une force sensiblement normale à la surface des galeries de cheminement sur chaque extrémité des bras durant sa translation. La combinaison de ces efforts génère un couple vrillant ou dévrillant la pale par déplacements en rotation de ses éléments entre les tronçons équipés de galeries de cheminement suivant le sens de déplacement du chariot. Dans la suite du texte, le terme « vrillage » fait référence par commodité aussi bien à un vrillage en tant que tel qu'à un dévrillage pour faciliter la lecture.

En effet, lorsque le chariot se déplace selon l'envergure de la pale, le déplacement d'un bras du chariot au sein de galeries de cheminement en pentes génère alors une torsion de la barre de torsion, mais aussi du tronçon de vrillage portant les galeries de cheminement. Chaque liaison hélicoïdale entraîne alors une rotation du tronçon de vrillage correspondant. Cette rotation implique une torsion de la pale qui se traduit par un vrillage de la pale entre les extrémités de la barre de torsion.

La raideur en torsion de la barre de torsion est éventuellement choisie de manière à être la plus importante possible et idéalement pour tendre à être infiniment rigide. Ainsi, la déformation de la barre de torsion suite à une translation du chariot est minimisée, alors qu'au contraire la rotation des tronçons de vrillage de la pale est maximisée.

Il en résulte un vrillage adaptatif de la pale et notamment du revêtement extérieur entre les tronçons équipés des galeries de cheminement suite à un déplacement du chariot.

Le pas de chaque liaison hélicoïdale et donc l'orientation des galeries de cheminement des tronçons de vrillage est aussi choisi de manière à maximiser le couple exercé sur le revêtement extérieur. Dès lors, un effort restreint exercé sur le chariot pour le déplacer en translation peut être suffisant pour générer un couple susceptible de vriller une pale conventionnelle.

Etonnamment, le déplacement de la barre de torsion dans la direction de l'envergure demeure toutefois limité pour générer le vrillage souhaité. Le système de vrillage a alors un impact limité sur l'équilibrage statique et dynamique de la pale.

Compte tenu de la masse du chariot et de la vitesse de rotation de la pale en utilisation, le chariot peut être déplacé sous l'effet de la force centrifuge. En effet, cette force centrifuge induit un effort axial sur le chariot entraînant sa translation.

Au titre d'une variante, le chariot peut comporter un dispositif ayant une masse variable pour faire varier l'intensité de la force centrifuge exercée sur le chariot.

Un tel chariot peut comprendre une poche solidaire en translation du chariot. La poche est reliée à un système hydraulique pouvant injecter un liquide dans cette poche ou prélever ce liquide de cette poche. Le volume contenu à chaque instant dans cette poche détermine alors la valeur de la force centrifuge, et par suite la position du chariot dans la pale.

A titre de variante ou de complément, on verra qu'un actionneur peut être utilisé pour déplacer le chariot, afin d'obtenir le vrillage souhaité.

Cet actionneur peut être piloté électriquement. En effet, une forte démultiplication de l'effort exercé par l'actionneur sur un chariot permet d'utiliser un actionneur de faible puissance électrique pour déplacer le chariot, ce qui permet de ne pas rencontrer les problèmes inhérents à certains états de la technique.

Un actionneur peut être utilisé en complément de la force centrifuge pour réaliser un déplacement du chariot dans le même sens que la force centrifuge, ou générer une force contraire pour déplacer le chariot dans le sens opposé à la force centrifuge.

En résumé, le système de vrillage présente donc l'avantage de requérir une faible quantité d'énergie pour déplacer en translation un chariot afin de permettre la création d'un couple de torsion important nécessaire au vrillage de la pale. En effet, la force centrifuge et/ou un actionneur peu puissant peuvent être suffisants pour générer un effort de translation important. Cet effort de translation est transmis par la barre de torsion à des tronçons de vrillage par leurs galeries de cheminement pour permettre de vriller la pale selon des valeurs de couple relativement importantes.

Un tel actionneur peut alors être agencé au sein d'une pale, en minimisant les inconvénients liés aux actionneurs puissants usuellement utilisés.

Lorsqu'un actionneur est utilisé, l'actionneur peut être placé près du pied de pale, pour limiter des effets non désirés liés à la force centrifuge. Le contrôle du vrillage est alors rendu précis et aisément modifiable dans les deux sens longitudinaux de la pale.

Par ailleurs, le blocage du système de vrillage pour un vrillage donné peut être obtenu à l'aide d'un système consommant peu ou pas d'énergie tel qu'un écrou bloqué par un moyen électromécanique. Une liaison hélicoïdale irréversible permet l'immobilisation du système sans aucune action extérieure.

Dans le sens du pied de pale vers l'extrémité libre de la pale, l'effet de la force centrifuge soulage de manière significative l'effort à fournir par un actionneur le cas échéant. Très peu d'énergie doit être fournie dans cette configuration par l'actionneur puisque le déplacement du chariot est partiellement assuré par la force centrifuge. L'actionneur est notamment alors utile pour permettre et autoriser le déplacement de la barre de torsion de manière contrôlée.

Le rappel de la barre de torsion vers le pied de pale, par l'intermédiaire de l'actionneur, est aussi rendu plus aisé grâce à un rappel élastique exercé naturellement par la pale.

Par ailleurs, le système de vrillage peut être disposé dans une pale conventionnelle.

En outre, la barre de torsion augmente de fait la rigidité en torsion de la pale, dans les portions de cette pale équipées du chariot. Dès lors, la rigidité en torsion de la pale et du revêtement extérieur de cette pale dans ces portions peut être réduite par rapport à une pale conventionnelle. Cette diminution de rigidité facilite le vrillage de la pale, sans modifier le comportement dynamique de cette pale.

La pale peut de plus comporter une ou plusieurs des caractéristiques qui suivent.

Par exemple, la barre de torsion s'étend le long d'une ligne géométrique de vrillage de la pale. Les centres de torsion des sections de la pale sont alors présents sur cette ligne géométrique de vrillage.

En outre, au moins un bras peut s'étendre symétriquement de part et d'autre de la barre de torsion, au moins un bras étant perpendiculaire à la barre de torsion.

Toutefois, les bras ne s'étendent pas nécessairement de manière symétrique de part et d'autre de la barre de torsion.

En outre, au moins un bras peut être perpendiculaire à la barre de torsion.

Cependant, un bras n'est pas forcément perpendiculaire à la barre de torsion, notamment s'il n'est pas rectiligne en étant composé de deux petits bras de part et d'autre de la barre par exemple. Par contre, la droite formée par les deux points d'application des efforts des bras sur les galeries de cheminement amont et aval est favorablement perpendiculaire à l'axe de la barre de torsion.

Par ailleurs, au moins un tronçon peut comporter une galerie de cheminement amont agencée contre le bord d'attaque de la pale et une galerie de cheminement aval agencée contre le bord de fuite de la pale.

La longueur du bras coulissant dans ce tronçon est alors maximisée, ce qui permet de maximiser le couple exercé par le chariot sur le revêtement extérieur dans le volume de la cavité de la pale.

Selon d'autres variantes, la galerie de cheminement amont et la galerie de cheminement aval d'un tronçon peuvent être plus ou moins éloignés du bord d'attaque et du bord de fuite pour optimiser le centrage du système.

En outre, les orientations des galeries de cheminement des tronçons de vrillage peuvent être modulées en fonction, entre autres, des objectifs en termes de vrillage et de course du chariot.

Dès lors, au moins une galerie de cheminement peut comporter une pluralité de plans inclinés.

De plus ou de manière alternative, au moins une galerie de cheminement comporte une pente courbe.

Par ailleurs et pour optimiser la translation du chariot, au moins une extrémité d'un bras peut comporter un moyen de roulement favorisant son coulissement dans la galerie de cheminement correspondante. Le moyen de roulement peut comprendre un galet, un roulement à billes ou à rouleaux ou encore un palier lisse par exemple.

Selon une version, le chariot comporte au moins deux bras coopérant avec des galeries de cheminement en effectuant des rotations selon des sens opposés. Le système comporte alors deux liaisons hélicoïdales. Ainsi, le système de vrillage peut générer la rotation de deux tronçons distincts de la pale selon des sens opposés pour vriller cette pale entre lesdits tronçons.

Selon une autre version, les galeries de cheminement d'un tronçon peuvent être planes pour générer une liaison glissière. Ainsi, le système de vrillage peut générer la rotation d'une portion de la pale en maintenant dans une position donnée un autre tronçon de cette pale, pour vriller la pale entre deux tronçons équipés de galeries de cheminement.

Pour favoriser le vrillage du revêtement, chacun des tronçons de la pale équipés de galeries de cheminement comporte un cadre définissant une galerie de cheminement amont et une galerie de cheminement aval ainsi qu'un orifice permettant la translation du chariot au travers de ce tronçon, ce cadre étant revêtu dudit revêtement extérieur.

Le chariot exerce alors un effort sur le cadre qui vrille le revêtement extérieur.

Eventuellement, le chariot peut comporter au moins trois bras. Cette caractéristique permet d'adapter le vrillage de la pale de manière plus précise à différentes envergures de cette pale, pour un même déplacement de la barre de torsion.

La pale peut aussi comporter au moins deux systèmes de vrillage. Une pale peut comporter plusieurs de ces systèmes de vrillage le long de l'envergure afin d'adapter plus précisément son vrillage.

Par ailleurs, le système de vrillage peut comporter un actionneur connecté au chariot pour déplacer en translation le chariot selon au moins un sens, l'actionneur étant agencé dans la cavité.

Cet actionneur peut comporter une vis sans fin coopérant avec un écrou et un moteur. Par exemple, le moteur entraine en rotation un écrou en prise sur une vis sans fin solidaire du chariot. L'inverse est aussi possible

En outre, le système de vrillage peut comporter un dispositif de démultiplication d'effort interposé entre l'actionneur et le chariot pour minimiser les efforts à générer par l'actionneur.

Selon une version, le dispositif de démultiplication d'effort comporte un organe hydraulique muni d'un piston principal de grande surface en communication hydraulique avec une pluralité de pistons intermédiaires de petites surfaces, le piston principal étant solidaire en translation dudit chariot, chaque piston intermédiaire étant commandé par un actionneur.

Cette version génère une démultiplication importante de l'effort à exercer sur chaque piston intermédiaire pour provoquer le déplacement du piston principal et donc du chariot. Le contrôle du vrillage de la pale est donc géré par voies hydrauliques. Les efforts exercés sur les pistons intermédiaires peuvent être obtenus par l'usage d'actionneurs électriques ou de masses variables par exemple.

L'actionneur peut générer par exemple un effort selon un sens pour contrer la force centrifuge exercée sur le chariot.

Selon une autre version, le dispositif de démultiplication d'effort comporte un lien longiligne relié au chariot et à un actionneur, le lien effectuant une boucle autour d'au moins deux poulies.

Le chariot est relié à l'une des extrémités du lien, un actionneur par exemple électrique ou à masse variable étant fixé à l'autre extrémité du lien. Les poulies représentent un système de palan permettant de démultiplier significativement l'effort à exercer pour déplacer le chariot.

Dans ce cas de figure, le chariot peut être déplacé selon un sens par la force centrifuge exercé sur ce chariot, et dans un autre sens par l'actionneur.

Selon une autre version, le dispositif de démultiplication d'effort comporte une came reliée à un actionneur et au chariot. Le système de came permet d'exercer des efforts de translation très importants à partir d'un couple relativement faible. Cette version peut faire intervenir des actionneurs de type électromécaniques.

En outre, il est à noter que ces dispositifs de démultiplication peuvent être actionnés au sol, à l'aide d'un actionneur qui n'est pas présent dans la pale. Un opérateur peut alors régler le vrillage d'une pale au sol en fonction du profil de la mission à effectuer.

Selon une autre réalisation, la pale comporte un actionneur déporté en dehors de l'élément sustentateur et relié au chariot par un lien.

Dans ce cas, la barre de torsion est liée par son extrémité à un câble qui ressort au niveau du pied de pale et s'engage dans le mât rotor où l'on peut prévoir qu'il soit relié à un vérin. L'ensemble serait réalisé par un système de tringleries. Le contrôle (de manière hydraulique par exemple) du déplacement vertical de la tige de ce vérin le long du mât rotor permet de gérer le vrillage de toutes les pales de manière simultanée et uniforme. Selon cette solution, le déplacement d'un chariot vers l'extrémité d'une pale serait assuré uniquement par l'action de la force centrifuge.

Par ailleurs, au moins un bras peut comporter un moyen de réglage de sa longueur. Par exemple, chaque bras est muni d'un corps mobile et de deux corps fixes coulissant par rapport au corps mobile, sous l'action d'un fluide ou d'un moteur par exemple.

Cette variante consiste à faire varier la longueur des bras pour moduler le couple appliqué sur le revêtement extérieur. On peut ainsi piloter le vrillage de la pale via le pilotage des bras.

Par exemple, le bras est étendu pour appliquer un couple à la pale et la tordre. Pour la dévriller, la longueur des bras est réduite pour permettre de réduire le couple appliqué au revêtement extérieur, ce revêtement extérieur se dévrillant alors grâce au rappel élastique de la pale.

Outre une pale, l'invention vise un aéronef muni d'un rotor. Ce rotor comporte au moins une pale du type décrit précédemment.

De plus, l'aéronef peut comporter un système de réglage de la vitesse de rotation du rotor pour ajuster la force centrifuge appliquée à chaque chariot.

En faisant varier la vitesse de rotation du rotor, un opérateur diminue ou augmente la force centrifuge exercée sur le chariot. Cette variation de la force centrifuge induit une modification de la position du chariot au sein de la pale, et donc une modification adaptable du vrillage de cette pale, du moins entre les tronçons coopérant avec le chariot.

L'aéronef peut éventuellement comprendre un système de blocage en position du chariot pour maintenir le vrillage de la pale à une valeur souhaitée indépendamment de la vitesse de rotation du rotor. Le système de blocage peut comprendre par exemple un écrou bloqué de façon électromagnétique et en prise sur un pas de vis de la barre de torsion, ou encore un système écrou /vis sans fin irréversible.

L'invention et ses avantages apparaîtront avec plus de détails dans le cadre de la description qui suit avec des exemples de réalisations donnés à titre illustratif en référence aux figures annexées qui représentent :
- les figures 1 et 2, des vues d'un aéronef muni d'une pale schématisé explicitant le fonctionnement de l'invention,
- la figure 3, une vue de dessus présentant un chariot coulissant dans des galeries de cheminement,
- les figures 4-5 et 6-7, des coupes montrant un chariot coulissant respectivement dans des galeries de cheminement amont et aval vues de coté,
- la figure 8, une vue éclatée du système montrant notamment un cadre d'un tronçon de vrillage de la pale,
- les figures 9 à 13, diverses réalisations d'un actionneur coopérant avec un chariot,
- les figures 14 à 15 diverses versions de galeries de cheminement,
- la figure 16, une vue chariot comportant au moins trois bras et
- la figure 17, un schéma présentant un bras à longueur variable.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

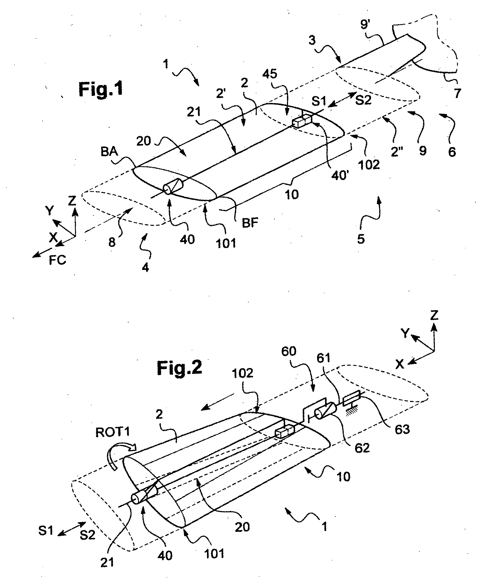

La figure 1 présente une vue schématique d'un aéronef 5. Cet aéronef 5 comporte un rotor 6 portant une pluralité de pales. Pour ne pas alourdir inutilement la figure 1, seule une pale 1 selon l'invention est représentée.

Cette pale 1 comporte un élément sustentateur 9. L'élément sustentateur 9 s'étend selon une direction longitudinale X d'une première zone extrémale 3 solidarisée à un pied 9' mobile par rapport à un moyeu 7 du rotor 6, vers une deuxième zone extrémale 4. De plus, l'élément sustentateur 9 s'étend selon une direction en élévation d'un intrados vers un extrados, et selon une direction transversale d'un bord d'attaque BA vers un bord de fuite BF.

L'élément sustentateur comporte un revêtement extérieur 2 définissant l'intrados et l'extrados. Ce revêtement extérieur 2 est alors pourvu d'une peau d'extrados 2' et d'une peau d'intrados 2" qui délimitent conjointement une cavité 8 à l'intérieur du revêtement extérieur 2.

Le volume interne au revêtement extérieur 2 est donc au moins partiellement creux.

De plus, la pale 1 est munie d'au moins un système de vrillage 10 pour vriller la pale entre deux tronçons 101, 102 de cette pale 1, en exerçant un couple sur le revêtement extérieur 2 sur ces deux tronçons 101, 102.

Le système de vrillage 10 est pourvu d'un chariot 20 agencé dans la cavité 8 du revêtement extérieur 2. Ce chariot est notamment muni d'une barre de torsion 21 s'étendant le long de la direction longitudinale X, et par exemple le long d'une ligne géométrique de vrillage AX de la pale 1.

Ce chariot est relié au revêtement extérieur 2 par au moins deux liaisons incluant au minimum une liaison hélicoïdale 40. Une telle liaison hélicoïdale relie un tronçon 101 de la pale 1 dénommée « tronçon de vrillage » au chariot.

Ainsi, ce chariot peut être relié au revêtement extérieur 2 par au moins deux liaisons hélicoïdales, ou par au moins une liaison hélicoïdale 40 et une liaison glissière 40' selon l'exemple de la figure 1.

Dès lors, le chariot est mobile en translation selon un premier et un deuxième sens S1, S2 au sein de la cavité 8. Le mouvement en translation du chariot peut être obtenu sous l'effet de la force centrifuge FC appliquée sur ce chariot lors de la rotation de la pale 1. Lorsque la force centrifuge augmente, le chariot se déplace selon le premier sens S1 en s'éloignant du moyeu 7. A l'inverse, lorsque la force centrifuge diminue (de telle manière qu'elle soit contrée par le rappel élastique de la pale), le chariot se déplace selon le deuxième sens S2 en se rapprochant du moyeu 7.

A cet effet, l'aéronef 5 peut comporter un système de réglage de la vitesse de rotation du rotor 6 pour régler/ajuster la force centrifuge FC appliquée à chaque chariot 20.

Le chariot peut aussi présenter une masse ajustable pour ajuster la valeur de la force centrifuge appliquée sur ce chariot. Ainsi, la position du chariot varie en fonction de sa masse à chaque instant, cette masse étant réglable.

En complément ou de manière alternative, le chariot peut se déplacer dans la cavité 8 selon au moins un sens S1, S2 sous l'effet d'un actionneur. Par exemple l'actionneur peut déplacer le chariot selon deux sens S1, S2. Selon une autre alternative, l'actionneur est un moyen de rappel déplaçant le chariot selon le deuxième sens S2 uniquement, le chariot se déplaçant selon le premier sens S1 sous l'effet de la force centrifuge.

Un tel actionneur peut être un actionneur électromécanique.

L'actionneur peut aussi présenter une masse ajustable pour ajuster la valeur de la force centrifuge appliquée sur cet actionneur. Ainsi, les positions de l'actionneur dans la pale et par suite du chariot varient en fonction de la masse de l'actionneur à chaque instant, cette masse étant réglable.

En référence à la figure 2, un actionneur 60 peut comprendre un moteur 63 mettant en rotation une vis sans fin 61, la vis sans fin 61 induisant une translation d'un écrou 62 solidaire du chariot 20.

Une translation du chariot 20 induit une rotation ROT1 de chaque tronçon de vrillage au travers d'une liaison hélicoïdale. Cette rotation ROT1 induit la création d'un couple vrillant le revêtement extérieur 2 entre deux tronçons 101, 102.

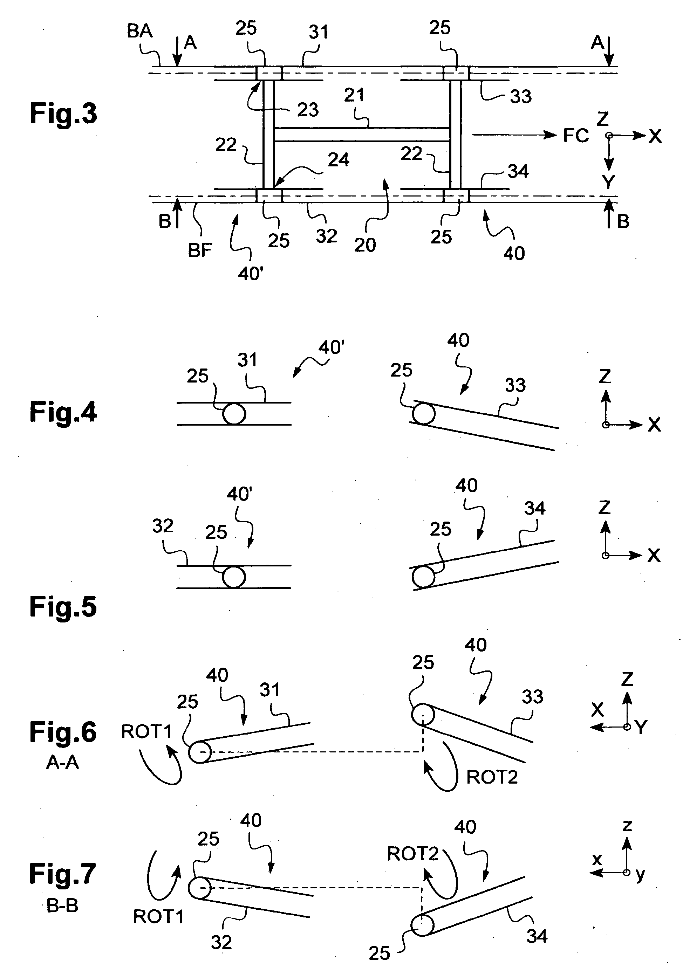

En référence à la figure 3, le chariot comporte au moins deux bras 22 qui sont solidaires de la barre de torsion 21. Au moins un bras s'étend transversalement, et éventuellement symétriquement, de part et d'autre de la barre de torsion 21.

Au moins un bras 22 peut de plus être perpendiculaire à la barre de torsion de manière à former une structure en forme de T. Ainsi, un chariot à deux bras 22 peut posséder une forme de H.

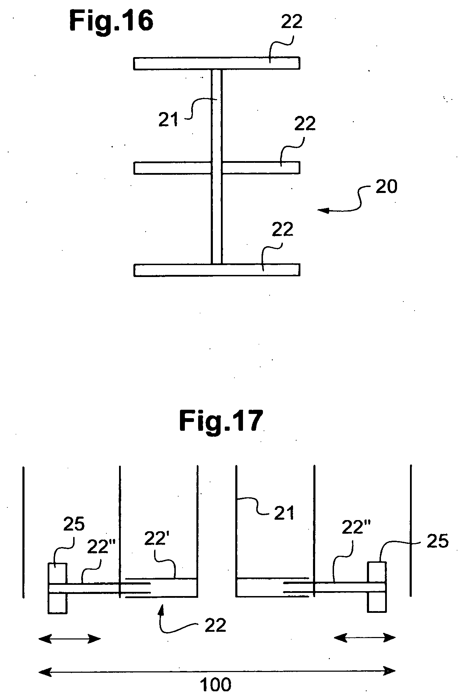

En référence à la figure 16, le chariot peut toutefois comporter au moins trois bras.

Conformément à l'enseignement de la figure 3, chaque bras 22 peut s'étendre d'une extrémité amont 23 vers une deuxième extrémité aval 24. Chaque extrémité peut porter un moyen de roulement 25. Un tel moyen de roulement peut comprendre au moins un galet, au moins un roulement à billes ou à rouleaux, ou au moins un palier lisse par exemple.

Dès lors, chaque liaison du chariot 20 au revêtement extérieur 2 inclut pour chaque bras :
- d'une galerie de cheminement amont 31, 33 agencée dans la cavité 8 entre le bord d'attaque BA de la pale 1 et la barre de torsion 21, et
- d'une galerie de cheminement aval 32, 34 agencée dans la cavité 8 entre le bord de fuite BF de la pale 1 la barre de torsion 21.

Ainsi, l'extrémité amont 23 de chaque bras coulisse dans une galerie de cheminement âmont 31, 33, et l'extrémité aval 24 de chaque bras coulisse dans une galerie de cheminement aval 32, 34.

Au moins un tronçon comporte une galerie de cheminement amont 31, 33 agencée contre le bord d'attaque BA de la pale 1 et une galerie de cheminement aval 32, 34 agencée contre le bord de fuite BF de la pale 1 pour maximiser la longueur du bras 22 correspondant.

La figure 4 et la figure 5 présentent respectivement les galeries de cheminement amont 31, 33, et aval 32, 34 au niveau de deux tronçons distincts de la pale.

Selon ces figures 4 et 5, le système de vrillage 10 est muni d'une liaison hélicoïdale 40 et d'une liaison glissière 40'.

Dès lors, les galeries de cheminement amont 31 et aval 32 de la liaison glissière 40' sont planes et parallèles l'une à l'autre.

A l'inverse, les galeries de cheminement amont 33 et aval 34 de la liaison hélicoïdale 40 présentent des orientations différentes et ne sont donc pas parallèles l'une à l'autre.

La translation d'un bras dans ces galeries de cheminement amont 33 et aval 34 de la liaison hélicoïdale 40 génère une torsion de la barre de torsion 21, et une rotation du tronçon de la pale relié à ces galeries de cheminement amont 33 et aval 34 de la liaison hélicoïdale 40. II en résulte une torsion du revêtement extérieur 2 entre la liaison hélicoïdale 40 et la liaison glissière 40'.

Selon les figures 6 et 7, le système de vrillage peut comprendre deux liaisons hélicoïdales 40 présentant des pas différents, voire opposés.

Lorsque les pas sont opposés selon la représentation des figures 6 et 7, le chariot 20 comporte deux bras 22 en effectuant des rotations selon des sens opposés ROT1, ROT2 lors de leur translation dans les galeries de cheminement.

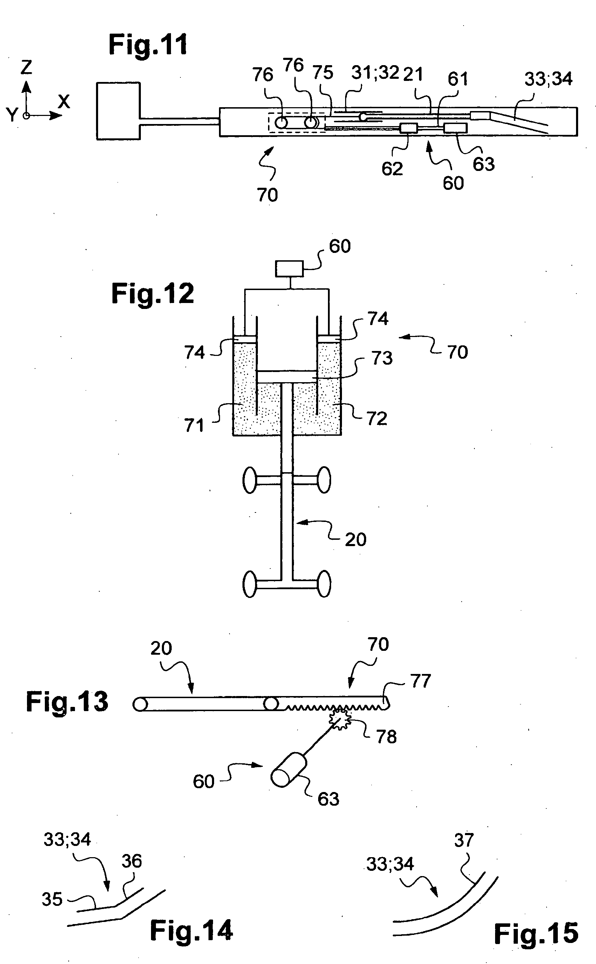

En référence à la figure 14, au moins une galerie de cheminement 32, 34 d'une liaison hélicoïdale comporte une pluralité de plans 35, 36 inclinés.

Selon la figure 15, au moins une galerie de cheminement 32, 34 d'une liaison hélicoïdale présente une pente courbe 37.

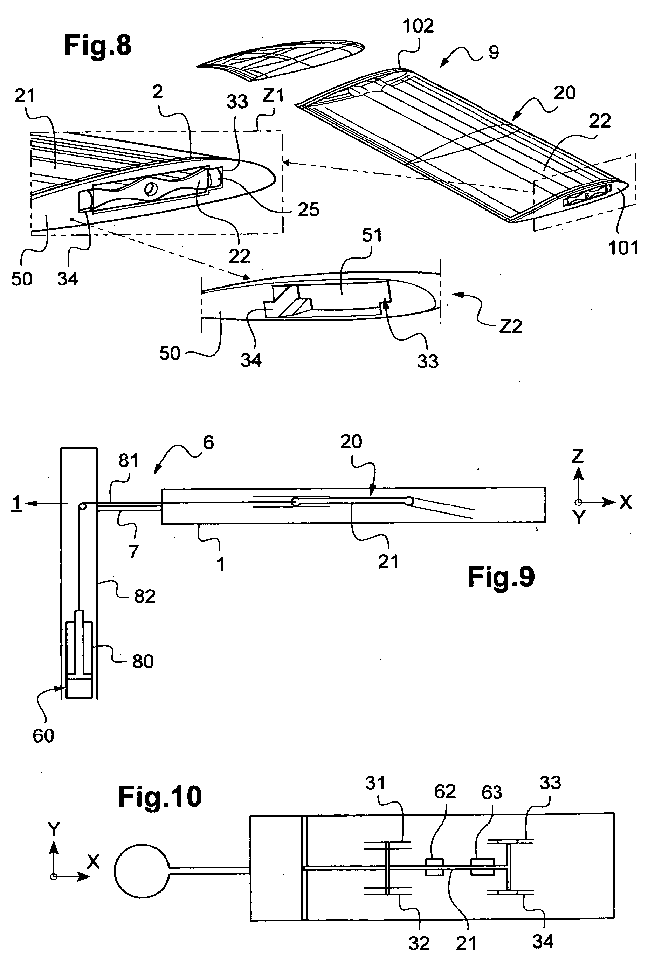

La figure 8 présente une portion d'un élément sustentateur s'étendant entre deux tronçons 101, 102 équipés de galeries de cheminement coopérant avec un chariot 20. On dénomme dans le texte « tronçon », un segment en envergure de la pale équipée de galeries de cheminement amont et aval. On appelle « portion » de la pale, un segment s'étendant d'un tronçon à un autre tronçon.

Les tronçons 101, 102 peuvent comporter un cadre 50 rigide particulièrement visible dans les détails Z1 et Z2 de la figure 8. Ce cadre est un cadre rigide solidaire du revêtement extérieur 2.

Dès lors, chaque cadre présente une galerie de cheminement amont 33 et une galerie de cheminement aval 34 ainsi qu'un orifice 51 permettant la translation du chariot 20 au travers de ce cadre.

Par suite, lorsque le chariot effectue une translation, les bras du chariot coulissent dans les galeries de cheminement. Au niveau des tronçons de vrillage munis de galeries de cheminement qui ne sont pas parallèles entre elles, un bras effectue une rotation. Cette rotation induit alors une rotation du cadre dans lequel coulisse le bras, et par suite un vrillage de la pale.

Par ailleurs, le système de vrillage peut comporter un actionneur électromécanique ou à masse variable par exemple pour déplacer le chariot selon au moins un sens.

Un tel actionneur 60 peut être disposé à l'extérieur de l'élément sustentateur d'une pale selon la réalisation de la figure 9.

Par exemple, l'actionneur 60 est relié à au moins un chariot 20 par un lien 81 filiforme. L'actionneur 60 peut alors être un vérin agencé dans le mât 82 mettant en rotation le moyeu 7 du rotor 6.

Cet actionneur peut éventuellement commander simultanément tous les chariots de toutes les pales du rotor 6, pour uniformiser le vrillage de ces pales.

Un actionneur peut aussi être agencé dans la cavité 8 d'une pale. Pour optimiser les caractéristiques de cet actionneur et limiter son encombrement, le système de vrillage peut alors posséder un dispositif de démultiplication d'effort interposé entre un chariot et l'actionneur.

Les figures 10 à 13 présentent divers dispositifs de démultiplication d'effort 70.

Les figures 10 et 11 divulguent un premier dispositif de démultiplication d'effort.

Ce dispositif de démultiplication d'effort 70 comporte un lien longiligne 75 relié au chariot 20 et à un actionneur 60. De plus, le dispositif de démultiplication d'effort 70 comporte au moins deux poulies 76, le lien 75 effectuant une boucle autour des deux poulies 76.

Le chariot et l'actionneur peuvent alors être disposés l'un au-dessus de l'autre.

Bien que les figures 10 et 11 présentent un actionneur électromécanique, d'autres types d'actionneurs sont envisageables.

La figure 12 divulgue un deuxième dispositif de démultiplication d'effort 70 de type hydraulique.

Le dispositif de démultiplication d'effort 70 inclut un carter 71 délimitant une chambre hydraulique 71 remplie d'un fluide incompressible 72.

De plus, le dispositif de démultiplication d'effort 70 inclut un piston principal 73 et au moins deux pistons intermédiaires coulissant dans le carter et en contact avec le fluide incompressible. Chaque piston intermédiaire possède une petite surface, à savoir une petite surface de contact avec le fluide incompressible. A l'inverse, le piston principal possède une grande surface, à savoir une grande surface de contact avec le fluide incompressible qui est supérieure à ladite petite surface.

Chaque piston intermédiaire est alors mis en mouvement par un actionneur, cet actionneur pouvant commander l'ensemble des pistons intermédiaire par exemple.

La figure 13 divulgue un troisième dispositif de démultiplication d'effort 70 à came.

Ainsi, le dispositif de démultiplication d'effort 70 peut comprendre une roue crantée 78 mise en rotation par un actionneur. La roue crantée engrène alors une tige reliée à un chariot 20.

La figure 17 présente un bras comportant un moyen de réglage de sa longueur 100. Cette longueur 100 représente la distance séparant les extrémités du bras coulissant dans les galeries de cheminement.

Par exemple, le bras comprend une partie fixe 22', et deux parties mobiles 22" portant chacune un moyen de roulement 25. La longueur 100 du bras est donc variable.

Ce bras peut comprendre un moyen usuel, hydraulique, pneumatique ou électrique par exemple pour déplacer les parties mobiles par rapport à la partie fixe.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, les pales présentées sont munies d'un seul système de vrillage. Toutefois, la pale peut comprendre une pluralité de portions équipées chacune d'un système de vrillage.

De même, les figures présentent des bras rectilignes perpendiculaires à une barre de torsion. Toutefois, chaque bras peut par exemple avoir une forme en V, les extrémités du bras passant néanmoins par une ligne géométrique perpendiculaire à la barre de torsion.

## Revendications

1. Pale (1) de rotor à vrillage adaptatif munie d'un élément sustentateur (9) qui comprend un revêtement extérieur (2) s'étendant selon une direction longitudinale (X) en envergure d'une première zone extrémale (3) à une deuxième zone extrémale (4) et transversalement d'un bord d'attaque vers un bord de fuite, ce revêtement extérieur (2) délimitant une cavité (8) interne,
**caractérisée en ce que** ladite pale (1) comporte au moins un système de vrillage (10) adaptatif muni :
- d'un chariot (20) disposé dans ladite cavité (8), ledit chariot (20) étant muni d'une barre de torsion (21) s'étendant le long de ladite direction longitudinale (X) et d'au moins deux bras (22) qui sont solidaires de la barre de torsion (21) et qui s'étendent transversalement de part et d'autre de la barre de torsion (21), ledit chariot (20) étant mobile en translation dans ladite cavité (8) selon ladite direction longitudinale (X),
- d'une liaison à chaque bras pour relier ledit chariot au revêtement extérieur, chaque liaison incluant un tronçon (101, 102) comprenant une galerie de cheminement amont (31, 33) agencée dans la cavité entre le bord d'attaque (BA) de la pale (1) et la barre de torsion (21) et une galerie de cheminement aval (32, 34) agencée dans la cavité (8) entre le bord de fuite (BF) de la pale (1) et la barre de torsion (21), chaque bras (22) s'étendant transversalement d'une extrémité amont (23) coulissant dans une galerie de cheminement amont (31, 33) vers une extrémité aval (24) coulissant dans une galerie de cheminement aval (32, 34),
- au moins une desdites liaisons étant une liaison hélicoïdale (40) incluant une galerie de cheminement amont (33) et une galerie de cheminement aval (34) d'un tronçon dit« tronçon de vrillage » (101) présentant des orientations distinctes générant une rotation de ce« tronçon de vrillage » (101) sous l'effet d'une translation du chariot (20).

2. Pale selon la revendication 1,
**caractérisée en ce que** ladite barre de torsion (21) s'étend le long d'une ligne géométrique de vrillage (AX) de la pale (1).

3. Pale selon l'une quelconque des revendications 1 à 2,
**caractérisée en ce qu'**au moins un bras (22) s'étend symétriquement de part et d'autre de la barre de torsion (21), au moins un bras (22) étant perpendiculaire à la barre de torsion (21).

4. Pale selon l'une quelconque des revendications 1 à 3,
**caractérisée en ce qu'**au moins un tronçon (101, 102) comporte une galerie de cheminement amont (31, 33) agencée contre le bord d'attaque (BA) de la pale (1) et une galerie de cheminement aval (32, 34) agencée contre le bord de fuite (BF) de la pale (1).

5. Pale selon l'une quelconque des revendications 1 à 4,
**caractérisée en ce qu'**au moins une galerie de cheminement (32, 34) comporte une pluralité de plans (35, 36) inclinés.

6. Pale selon l'une quelconque des revendications 1 à 5,
**caractérisée en ce qu'**au moins une galerie de cheminement (32, 34) comporte une pente courbe (37).

7. Pale selon l'une quelconque des revendications 1 à 6, **caractérisée en ce qu'**au moins une extrémité (23) d'un bras (22) comporte un moyen de roulement (25) favorisant son coulissement dans la galerie de cheminement (31, 32, 33, 34) correspondante.

8. Pale selon l'une quelconque des revendications 1 à 7,
**caractérisée en ce que** ledit chariot (20) comporte au moins deux bras (22) coopérant avec des galeries de cheminement (31, 32, 33, 34) en effectuant des rotations selon des sens antagonistes (ROT1, ROT2).

9. Pale selon l'une quelconque des revendications 1 à 8,
**caractérisée en ce que** chacune desdits tronçons (101, 102) comporte un cadre (50) définissant une galerie de cheminement amont (31, 33) et une galerie de cheminement aval (32, 34) ainsi qu'un orifice (51) permettant la translation du chariot (20) au travers du tronçon (101, 102), ledit cadre (50) étant revêtu dudit revêtement extérieur (2).

10. Pale selon l'une quelconque des revendications 1 à 9,
**caractérisée en ce que** ledit chariot (20) comporte au moins trois bras (22).

11. Pale selon l'une quelconque des revendications 1 à 10,
**caractérisée en ce que** ladite pale (1) comporte au moins deux systèmes de vrillage.

12. Pale selon l'une quelconque des revendications 1 à 11,
**caractérisée en ce que** ledit système de vrillage (10) adaptatif comporte un actionneur (60) connecté audit chariot (20) pour déplacer en translation ledit chariot (20) selon au moins un sens (S1, S2), ledit actionneur (60) étant agencé dans ladite cavité (8).

13. Pale selon la revendication 12,
**caractérisée en ce que** ledit actionneur (60) comporte une vis sans fin (61) coopérant avec un écrou (62) et un moteur (63).

14. Pale selon l'une quelconque des revendications 12 à 13,
**caractérisée en ce que** ledit système de vrillage (10) adaptatif comporte un dispositif de démultiplication d'effort (70) interposé entre l'actionneur (60) et le chariot (20).

15. Pale selon la revendication 14,
**caractérisée en ce que** ledit dispositif de démultiplication d'effort (70) comporte un organe hydraulique (71) muni d'un piston principal (73) de grande surface en communication hydraulique avec une pluralité de pistons intermédiaires (74) de petite surface, le piston principal (73) étant solidaire en translation dudit chariot (20), chaque piston intermédiaire (74) étant commandé par un actionneur (60).

16. Pale selon la revendication 14,
**caractérisée en ce que** ledit dispositif de démultiplication d'effort (70) comporte un lien longiligne (75) relié au chariot (20) et à un actionneur (60), le lien (75) effectuant une boucle autour d'au moins deux poulies (76).

17. Pale selon la revendication 14,
**caractérisée en ce que** ledit dispositif de démultiplication d'effort (70) comporte une came (77, 78) reliée à un actionneur (60) et au chariot (20).

18. Pale selon l'une quelconque des revendications 1 à 14, **caractérisée en ce que** la pale (1) comporte un actionneur (60) déporté en dehors de l'élément sustentateur (9) et relié au chariot (20) par un lien (81).

19. Pale selon l'une quelconque des revendications 1 à 18,
**caractérisée en ce que** ledit chariot comporte un dispositif ayant une masse variable pour faire varier l'intensité de la force centrifuge exercé sur le chariot.

20. Pale selon l'une quelconque des revendications 1 à 19,
**caractérisée en ce qu'**au moins un bras comporte un moyen de réglage de sa longueur.

21. Aéronef (5) muni d'un rotor,
**caractérisé en ce que** ledit rotor (6) comporte au moins une pale (1) selon l'une quelconque des revendications 1 à 20.

22. Aéronef selon la revendication 21,
**caractérisé en ce que** ledit aéronef (5) comporte un système de réglage de la vitesse de rotation du rotor (6) pour régler la force centrifuge (FC) appliquée à chaque chariot (20).

## Patentansprüche

1. Rotorblatt (1) mit adaptivem Verdrehmechanismus, welches mit einem Auftrieb erzeugenden Element (9) versehen ist, das eine äußere Hülle (2) aufweist, die sich von einem ersten Endbereich (3) in Längsrichtung (X) bis zu einem zweiten Endbereich (4) und in Querrichtung von einer Vorderkante bis zu einer Hinterkante erstreckt, wobei die äußere Hülle (2) einen inneren Hohlraum (8) eingrenzt,
**dadurch gekennzeichnet, dass** das Rotorblatt (1) mindestens einen adaptiven Verdrehmechanismus (10) aufweist, welcher versehen ist mit:
- einem Schlitten (20), der in dem Hohlraum (8) angeordnet ist, wobei der Schlitten (20) mit einer Torsionsstange (21) versehen ist, die sich entlang der Längsrichtung (X) erstreckt, und mit mindestens zwei Armen (22), die mit der Torsionsstange (21) fest verbunden sind und die sich quer zu beiden Seiten der Torsionsstange (21) erstrecken, wobei der Schlitten (20) in dem Hohlraum (8) entlang der Längsrichtung (X) translationsbeweglich ist,
- einer Verbindung an jedem Arm, um den Schlitten mit der äußeren Hülle zu verbinden, wobei jede Verbindung einen Abschnitt (101, 102) aufweist, der eine vordere Führungspassage (31, 33), die in dem Hohlraum zwischen der Vorderkante (BA) des Rotorblatts (1) und dem Torsionsstab (21) angeordnet ist, und eine hintere Führungspassage (32, 34), die in dem Hohlraum (8) zwischen der Hinterkante (BF) des Rotorblatts (1) und dem Torsionsstab (21) angeordnet ist, aufweist, wobei sich jeder Arm (22) quer von einem vorderen Ende (23), das in einer vorderen Führungspassage (31, 33) gleitet, bis zu einem hinteren Ende (24), das in einer hinteren Führungspassage (32, 34) gleitet, erstreckt,
- wobei mindestens eine der Verbindungen eine spiralförmige Verbindung (40) ist, die eine vordere (33) und eine hintere (34) Führungspassage eines "Verdrehabschnitt" (101) genannten Abschnitts umfasst, der verschiedene Orientierungen aufweist, die eine Drehung dieses "Verdrehabschnitts" (101) unter der Einwirkung einer Translationsbewegung des Schlittens (20) erzeugen.

2. Rotorblatt nach Anspruch 1,
**dadurch gekennzeichnet, dass** sich der Torsionsstab (21) entlang einer geometrischen Verdrehlinie (AX) des Rotorblatts (1) erstreckt.

3. Rotorblatt nach einem der Ansprüche 1 bis 2,
**dadurch gekennzeichnet, dass** sich mindestens ein Arm (22) symmetrisch zu beiden Seiten des Torsionsstabs (21) erstreckt, wobei mindestens ein Arm (22) senkrecht zu dem Torsionsstab (21) verläuft.

4. Rotorblatt nach einem der Ansprüche 1 bis 3,
**dadurch gekennzeichnet, dass** mindestens ein Abschnitt (101, 102) eine vordere Führungspassage (31, 33) aufweist, die an der Vorderkante (BA) des Rotorblatts (2) angeordnet ist, und eine hintere Führungspassage (32, 34) aufweist, die an der Hinterkante (BF) des Rotorblatts (1) angeordnet ist.

5. Rotorblatt nach einem der Ansprüche 1 bis 4,
**dadurch gekennzeichnet, dass** mindestens eine Führungspassage (32, 34) eine Mehrzahl geneigter Ebenen (35, 36) aufweist.

6. Rotorblatt nach einem der Ansprüche 1 bis 5,
**dadurch gekennzeichnet, dass** mindestens eine Führungspassage (32, 34) eine gekrümmte Schräge (37) aufweist.

7. Rotorblatt nach einem der Ansprüche 1 bis 6,
**dadurch gekennzeichnet, dass** mindestens ein Ende (23) eines Arms (22) ein Lager (25) aufweist, das dessen Gleitern in der zugehörigen Führungspassage (31, 32, 33, 34) begünstigt.

8. Rotorblatt nach einem der Ansprüche 1 bis 7,
**dadurch gekennzeichnet, dass** der Schlitten (20) mindestens zwei Arme (22) aufweist, die mit den Führungspassagen (31, 32, 33, 34) zusammenwirken, indem sie gegenläufige Drehungen (ROT 1, ROT2) ausführen.

9. Rotorblatt nach einem der Ansprüche 1 bis 8,
**dadurch gekennzeichnet, dass** jeder der Abschnitte (101, 102) einen Rahmen (50) aufweist, der eine vordere Führungspassage (31, 33) und eine hintere Führungspassage (32, 34) definiert, sowie eine Öffnung (51), die die Translationsbewegung des Schlittens (20) durch den Abschnitt (101, 102) ermöglicht, wobei der Rahmen (50) mit der äußeren Hülle (2) verkleidet ist.

10. Rotorblatt nach einem der Ansprüche 1 bis 9,
**dadurch gekennzeichnet, dass** der Schlitten (20) mindestens drei Arme (22) aufweist.

11. Rotorblatt nach einem der Ansprüche 1 bis 10,
**dadurch gekennzeichnet, dass** das Rotorblatt (1) mindestens zwei Verdrehmechanismen aufweist.

12. Rotorblatt nach einem der Ansprüche 1 bis 11,
**dadurch gekennzeichnet, dass** der adaptive Verdrehmechanismus (10) ein Betätigungsorgan (60) aufweist, das mit dem Schlitten (20) verbunden ist, um den Schlitten (20) entlang mindestens einer Richtung (S1, S2) translatorisch zu bewegen, wobei das Betätigungsorgan (60) in dem Hohlraum (8) angeordnet ist.

13. Rotorblatt nach Anspruch 12,
**dadurch gekennzeichnet, dass** das Betätigungsorgan (60) eine Endlosschraube (61) aufweist, die mit einer Schraubenmutter (62) und einem Motor (63) zusammenwirkt.

14. Rotorblatt nach einem der Ansprüche 12 bis 13,
**dadurch gekennzeichnet, dass** der adaptive Verdrehmechanismus (10) eine zwischen dem Betätigungsorgan (60) und dem Schlitten (20) angeordnete Kraftübersetzungsvorrichtung (70) aufweist.

15. Rotorblatt nach Anspruch 14,
**dadurch gekennzeichnet, dass** die Kraftübersetzungsvorrichtung (70) ein hydraulisches Organ (71) aufweist, mit einem Hauptkolben (73) mit großer Oberfläche, der hydraulisch mit einer Mehrzahl von Zwischenkolben (74) mit kleiner Oberfläche verbunden ist, wobei der Hauptkolben (73) mit dem Schlitten (20) translatorisch fest verbunden ist, wobei jeder Zwischenkolben (74) von einem Betätigungsorgan (60) gesteuert wird.

16. Rotorblatt nach Anspruch 14,
**dadurch gekennzeichnet, dass** die Kraftübersetzungsvorrichtung (70) eine längliche Verbindung (75) aufweist, die mit dem Schlitten (20) und mit einem Betätigungsorgan (60) verbunden ist, wobei die Verbindung (75) eine Schlinge um mindestens zwei Rollen (76) bildet.

17. Rotorblatt nach Anspruch 14,
**dadurch gekennzeichnet, dass** die Kraftübersetzungsvorrichtung (70) eine Nocke (77, 78) aufweist, die mit einem Betätigungsorgan (60) und mit dem Schlitten (20) verbunden ist.

18. Rotorblatt nach einem der Ansprüche 1 bis 14,
**dadurch gekennzeichnet, dass** das Rotorblatt (1) ein aus dem Auftrieb erzeugenden Element (9) ausgelagertes Betätigungsorgan (60), das mit dem Schlitten (20) über eine Verbindung (81) verbunden ist, aufweist.

19. Rotorblatt nach einem der Ansprüche 1 bis 18,
**dadurch gekennzeichnet, dass** der Schlitten eine Vorrichtung mit variabler Masse aufweist, um die Stärke der auf den Schlitten ausgeübten Zentrifugalkraft zu verändern.

20. Rotorblatt nach einem der Ansprüche 1 bis 19,
**dadurch gekennzeichnet, dass** mindestens ein Arm ein Mittel zum Einstellen seiner Länge aufweist.

21. Luftfahrzeug (5) mit einem Rotor,
**dadurch gekennzeichnet, dass** der Rotor (6) mindestens ein Rotorblatt (1) gemäß einem der Ansprüche 1 bis 20 aufweist.

22. Luftfahrzeug nach Anspruch 21,
dadurch gekenntzeichnet, dass das Luftfahrzeug (5) ein System zur Regelung der Drehgeschwindigkeit des Rotors (6) aufweist, um die auf jeden Schlitten (20) ausgeübte Zentrifugalkraft (FC) einzustellen.

## Claims

1. Adaptively-twistable rotor blade (1) provided with a lift element (9) which comprises an outer covering (2) extending spanwise in a longitudinal direction (X) from a first end zone (3) towards a second end zone (4) and transversely from a leading edge towards a trailing edge, the outer covering (2) delimiting an internal cavity (8),
**characterised in that** said blade (1) comprises at least one adaptive twist system (10) provided with:
- a carriage (20) arranged in said cavity (8), said carriage (20) being provided with a torsion bar (21) extending along said longitudinal direction (X) and at least two arms (22) which are secured to the torsion bar (21) and which extend transversely on one side and on the other side of the torsion bar (21), said carriage (20) being movable in translation in said cavity (8) in said longitudinal direction (X),
- a connection on each arm for connecting said carriage to the outer covering, each connection including a segment (101, 102) comprising an upstream guide gallery (31, 33) arranged in the cavity between the leading edge (BA) of the blade (1) and the torsion bar (21) and a downstream guide gallery (32, 34) arranged in the cavity (8) between the trailing edge (BF) of the blade (1) and the torsion bar (21), each arm (22) extending transversely from an upstream end (23) sliding in an upstream guide gallery (31, 33) towards a downstream end (24) sliding in a downstream guide gallery (32, 34),
- at least one of said connections being a helical connection (40) including an upstream guide gallery (33) and a downstream guide gallery (34) of a segment referred to as a "twist segment" (101) having distinct orientations generating a rotation of the "twist segment" (101) under the effect of a translation of the carriage (20).

2. Blade according to claim 1,
**characterised in that** said torsion bar (21) extends along a geometrical twist line (AX) of the blade (1).

3. Blade according to any one of claims 1 to 2,
**characterised in that** at least one arm (22) extends symmetrically on one side and on the other side of the torsion bar (21), at least one arm (22) being perpendicular to the torsion bar (21).

4. Blade according to any one of claims 1 to 3,
**characterised in that** at least one segment (101, 102) comprises an upstream guide gallery (31, 33) arranged against the leading edge (BA) of the blade (1) and a downstream guide gallery (32, 34) arranged against the trailing edge (BF) of the blade (1).

5. Blade according to any one of claims 1 to 4,
**characterised in that** at least one guide gallery (32, 34) comprises a plurality of inclined planes (35, 36).

6. Blade according to any one of claims 1 to 5,
**characterised in that** at least one guide gallery (32, 34) comprises a curved slope (37).

7. Blade according to any one of claims 1 to 6,
**characterised in that** at least one end (23) of an arm (22) comprises a rolling means (25) facilitating its sliding in the corresponding guide gallery (31, 32, 33, 34).

8. Blade according to any one of claims 1 to 7,
**characterised in that** said carriage (20) comprises at least two arms (22) co-operating with guide galleries (31, 32, 33, 34) while executing rotations in opposite directions (ROT1, ROT2).

9. Blade according to any one of claims 1 to 8,
**characterised in that** each of said segments (101, 102) comprises a frame (50) defining an upstream guide gallery (31, 33) and a downstream guide gallery (32, 34) as well as an orifice (51) allowing the translation of the carriage (20) through the segment (101, 102), said frame (50) being covered by said outer covering (2).

10. Blade according to any one of claims 1 to 9,
**characterised in that** said carriage (20) comprises at least three arms (22).

11. Blade according to any one of claims 1 to 10,
**characterised in that** said blade (1) comprises at least two twist systems.

12. Blade according tc any one of claims 1 to 11,
**characterised in that** said adaptive twist system (10) comprises an actuator (60) connected to said carriage (20) for moving said carriage (20) in translation in at least one direction (S1, S2), said actuator (60) being arranged in said cavity (8).

13. Blade according to claim 12,
**characterised in that** said actuator (60) comprises a worm screw (61) co-operating with a nut (62) and a motor (63).

14. Blade according to any one of claims 12 to 13,
**characterised in that** said adaptive twist system (10) comprises a force reduction device (70) interposed between the actuator (60) and the carriage (20).

15. Blade according to claim 14,
**characterised in that** said force reduction device (70) comprises a hydraulic member (71) provided with a main piston (73) of large area in hydraulic communication with a plurality of intermediate pistons (74) of small area, the main piston (73) being integral in translation with said carriage (20), each intermediate system (74) being controlled by an actuator (60).

16. Blade according to claim 14,
**characterised in that** said force reduction device (70) comprises an elongate link (75) connected to the carriage (20) and to an actuator (60), the link (75) forming a loop around at least two pulleys (76).

17. Blade according to claim 14,
**characterised in that** said force reduction device (70) comprises a cam (77, 78) connected to an actuator (60) and to the carriage (20).

18. Blade according to any one of claims 1 to 14,
**characterised in that** the blade (1) comprises an actuator (60) located outside the lift element (9) and connected to the carriage (20) by a link (81).

19. Blade according to any one of claims 1 to 18,
**characterised in that** said carriage comprises a device having a variable mass in order to vary the intensity of the centrifugal force exerted on the carriage.

20. Blade according to any one of claims 1 to 19,
**characterised in that** at least one arm comprises a means for setting its length.

21. Aircraft (5) provided with a rotor,
**characterised in that** said rotor (6) comprises at least one blade (1) according to any one of claims 1 to 20.

22. Aircraft according to claim 21,
**characterised in that** said aircraft (5) comprises a system for setting the speed of rotation of the rotor (6) in order to set the centrifugal force (FC) applied to each carriage (20).
